# EUROPÄISCHE PATENTSCHRIFT

(11) **EP 1 604 353 B1**
(45) Veröffentlichungstag und Bekanntmachung des Hinweises auf die Patenterteilung: **27.12.2006**
(21) Anmeldenummer: 04711349.3
(22) Anmeldetag: 16.02.2004
(51) Int. Cl.: G10L 15/26, H04M 1/27

(54) **SPRACHRÜCKMELDUNG BEI DER SPRECHERUNABHÄNGIGEN NAMENSWAHL**
VOICE ACKNOWLEDGEMENT INDEPENDENT OF A SPEAKER WHILE DIALLING BY NAME
REPONSE VOCALE LORS DE LA COMPOSITION PAR NOM INDEPENDANTE DU LOCUTEUR

(30) Priorität: 17.03.2003 DE 10311698
(43) Veröffentlichungstag der Anmeldung: 14.12.2005
(73) Patentinhaber: SIEMENS AKTIENGESELLSCHAFT, 80333 München (DE)
(72) Erfinder: HOFFMANN, Gerhard, 82223 Eichenau (DE)
(86) Internationale Anmeldenummer: PCT/EP2004/001437
(87) Internationale Veröffentlichungsnummer: WO 2004/084184

(56) Entgegenhaltungen:
- EP-A- 0 699 941
- EP-A- 1 170 932
- DE-C- 19 751 123
- US-A1- 2002 099 542

## Beschreibung

Die Technologie der Spracherkennung für mobile Endgeräte ist mittlerweile so weit fortgeschritten, dass es möglich ist, eine sprecherunabhängige Namenswahl (Speaker Independent Name Dialing) zu realisieren. Einträge des Adressbuches können dabei direkt durch Sprechen des eingetragenen Namens gewählt werden, ohne dass zuvor beim Benutzer ein Training des Sprachmusters durchgeführt werden muss.

Allerdings wird bei einer solchen Form der Spracherkennung der Handsfree-Modus eingeschränkt, da der Benutzer zur Verifizierung des Erkennungsergebnisses auf die Rückmeldung im Display angewiesen ist und keine akustische Rückmeldung des erkannten Eintrages erhält.

Um eine akustische Rückmeldung für die sprecherunabhängige Namenswahl zu realisieren, wird heute davon ausgegangen, dass Text-zu-Sprache (Text-to-Speech; TTS)-Komponenten zum Einsatz kommen müssen. Diese TTS-Komponenten generieren aus einem Text eine synthetische Sprachausgabe. Der erkannte Namenseintrag eines Adressbuches kann damit synthetisiert ausgegeben werden. Die einzusetzenden TTS-Komponenten benötigen jedoch eine für mobile Endgeräte und eingebettete Hardware hohe Rechenleistung sowie großen Speicherbedarf und sind damit nur sehr kostenintensiv zu realisieren. Die Sprachqualität solcher TTS-Systeme für mobile Geräte ist darüber hinaus wegen des kleinen Footprints auf einem geringen Niveau. Weiterhin werden ausländische Namen durch TTS-Systeme vielfach ungewohnt und fehlerhaft ausgesprochen.

Die deutsche Patentschrift DE 197 51 123 C1 offenbart ein Verfahren zur Sprachrückmeldung bei einer sprecherunabhängigen Namenswahl für ein Kommunikationsendgerät, bei dem das Wortmodell des erkannten Namens als synthetische Sprache über einen Lautsprecher wiedergegeben wird.

Die europäische Patentschrift EP 1 170 932 A1 offenbart ein Verfahren zur Sprachrückmeldung bei einer sprecherabhängigen Namenswahl, bei dem die Spracheingabe eines Nutzers anhand einer Datenbasis von gespeicherten Sprachmustern erkannt wird und daraufhin die als dem Erkennungseintrag zugeordnet gespeicherte Aufnahme ausgegeben wird.

Davon ausgehend liegt der Erfindung die Aufgabe zugrunde, eine Sprachrückmeldung für eine erkannte Spracheingabe möglichst ressourcenschonend zu realisieren.

Diese Aufgabe wird durch die in den unabhängigen Patentansprüchen angegebenen Erfindungen gelöst. Vorteilhafte Ausgestaltungen ergeben sich aus den Unteransprüchen.

Dementsprechend wird in einem Verfahren zur Sprachrückmeldung bei einer sprecherunabhängigen Spracherkennung, insbesondere auf eingebetteter Hardware und/oder einem mobilen Endgerät, durch einen Benutzer ein erstes Sprachsignal mittels Einsprechen eingegeben. Die Bezeichnung "erstes" Sprachsignal dient lediglich dazu, das Sprachsignal im Rahmen dieses Textes von weiteren, folgenden Sprachsignalen zu unterscheiden. Das eingegebene erste Sprachsignal wird erkannt, indem es einem Erkennungseintrag zugeordnet wird, und aufgenommen, indem Daten zur akustischen Wiederherstellung des Sprachsignals abgespeichert werden, die zur akustischen Repräsentation des Sprachsignals benötigt werden. Die Aufnahme des eingegebenen ersten Sprachsignals wird schließlich als dem Erkennungseintrag zugeordnet gespeichert. Dadurch steht sie für spätere Erkennungen als Bestätigungssignal in Form einer Sprachrückmeldung zur Verfügung.

Vorzugsweise wird die Aufnahme des eingegebenen ersten Sprachsignals nur dann als dem Erkennungseintrag zugeordnet gespeichert, wenn vom Benutzer bestätigt wird, dass das eingegebene erste Sprachsignal richtig erkannt wurde. Alternativ oder ergänzend kann die Abspeicherung eines fälschlich einem Erkennungseintrag zugeordneten Sprachsignals später auch wieder gelöscht werden.

Insbesondere vor der Bestätigung, dass das eingegebene Sprachsignal richtig erkannt wurde, lässt sich eine optische Repräsentation des Erkennungseintrags auf einer Anzeige ausgeben. Der Benutzer kann dadurch die optische Repräsentation des Erkennungseintrags lesen und danach bestätigen, dass das Sprachsignal richtig erkannt wurde.

Nach dem Abspeichern und Erkennen des ursprünglichen Sprachsignals gestalten sich Spracherkennungsvorgänge von weiteren, dem ersten Sprachsignal gleichen oder ähnlichen Sprachsignalen wie folgt: Vom Benutzer wird ein weiteres Sprachsignal eingegeben. Das weitere eingegebene Sprachsignal wird erkannt, indem es dem Erkennungseintrag zugeordnet wird. Schließlich wird die als dem Erkennungseintrag zugeordnet gespeicherte Aufnahme des eingegebenen ersten Sprachsignals zur Bestätigung, dass das weitere eingegebene Sprachsignal als der Erkennungseintrag erkannt wurde, akustisch ausgegeben.

Zusätzlich zu der oben beschriebenen automatischen Zuordnung und Abspeicherung von Sprachsignalen kann dem Benutzer die Möglichkeit gegeben werden, explizit selbst Sprachsignale aufzunehmen und sie manuell Erkennungseinträgen zuzuordnen. Dazu ist zu einem weiteren Erkennungseintrag ohne zwischengeschaltete Spracherkennung ein gewünschtes Sprachsignal eingebbar und abspeicherbar.

Das Verfahren ist insbesondere ein Verfahren zur sprecherunabhängigen Namenswahl. Es lässt sich aber auch für alle anderen Anwendungsgebiete der, insbesondere sprecherunabhängigen, Spracherkennung anwenden, bei denen eine Sprachrückmeldung zur Realisierung eines "Full Handsfree"-Modus benötigt wird, wie beispielsweise bei Command & Control, bei Sprachlinks (Voice Links), insbesondere bei der Internetnavigation, bei der Sprachwahl von Anwendungen (Speech Application Selection) und/oder bei der Spracheingabe von Stadt- und Straßennamen (City Name Input).

Eine Vorrichtung, die eingerichtet ist und Mittel aufweist, das geschilderte Verfahren auszuführen, lässt sich beispielsweise durch entsprechendes Programmieren und Einrichten einer Datenverarbeitungsanlage realisieren. Die Vorrichtung weist dabei insbesondere Mittel zur Eingabe des Sprachsignals, Mittel zum Erkennen des Sprachsignals durch Zuordnen zu einem Erkennungseintrag und Speichermittel auf, in denen das eingegebene Sprachsignal zu dem Erkennungseintrag abspeicherbar ist. Vorteilhafte Ausgestaltungen der Vorrichtung ergeben sich analog zu den vorteilhaften Ausgestaltungen des Verfahrens.

Die Vorrichtung ist insbesondere ein mobiles Endgerät, vorzugsweise eine mobile Kommunikationseinrichtung, etwa in Form eines Mobiltelefons und/oder PDAs oder eine mobile Navigationseinrichtung in Form eines Navigationssystems in einem Fahrzeug.

Ein Programmprodukt für eine Datenverarbeitungsanlage, das Codeabschnitte enthält, mit denen eines der geschilderten Verfahren auf der Datenverarbeitungsanlage ausgeführt werden kann, lässt sich durch geeignete Implementierung des Verfahrens in einer Programmiersprache und Übersetzung in von der Datenverarbeitungsanlage ausführbaren Code ausführen. Die Codeabschnitte werden dazu gespeichert. Dabei wird unter einem Programmprodukt das Programm als handelbares Produkt verstanden. Es kann in beliebiger Form vorliegen, so zum Beispiel auf Papier, einem computerlesbaren Datenträger oder über ein Netz verteilt.

Weitere Vorteile und Merkmale der Erfindung ergeben sich aus der Beschreibung eines Ausführungsbeispiels.

Durch die Erfindung kann bei der sprecherunabhängigen Namenswahl ohne die Verwendung von TTS-Komponenten schrittweise eine Sprachrückmeldung kostengünstig realisiert werden.

Ein durch einen Benutzer gesprochener Name wird dazu bei einer Sprachwahl nicht nur dem Spracherkenner zugeführt, sondern er wird zusätzlich parallel auch als Sprachkonserve mitgeschnitten. Bei der erstmaligen Namenswahl eines Adressbucheintrages wird der vom Spracherkenner erkannte Namenseintrag optisch dem Benutzer im Display angezeigt. Darüber hinaus wird der Benutzer akustisch mit einem Tonsignal aufgefordert, das Erkennungsergebnis zu bestätigen. Bestätigt der Benutzer das Ergebnis, wird der erkannte Adressbucheintrag gewählt und die Aufnahme des eingegebenen Sprachsignals in Form der aufgenommenen Sprachkonserve dem Erkennungseintrag in Form des Adressbucheintrages zugeordnet. Bei jeder weiteren Namenswahl dieses Eintrages kann nun neben der optischen Rückmeldung auch die zugeordnete Sprachkonserve als Sprachrückmeldung verwendet werden. Der Benutzer wird dadurch sowohl visuell als auch akustisch über das Erkennungsergebnis informiert. Es lässt sich damit ein Full Handsfree-Modus erreichen, der eine korrekte, qualitativ hochwertige Sprachwidergabe besitzt. Durch die zuverlässig zugeordnete Sprachkonserve des Benutzers kann dabei auf die kostenintensive TTS-Komponente verzichtet werden.

Die Erfindung beruht also auf einem selbstinitiierenden System, das auf der Kombination des Sprachmitschnittes bei der Spracherkennung und der zuverlässigen Zuordnung eines Sprachmitschnittes durch die Bestätigung des Erkennungsergebnisses basiert.

Dies soll nochmals an einem weiter konkretisierten Ausführungsbeispiel erläutert werden. In einem Mobiltelefon werden mittels eines sprecherunabhängigen, HMM-basierten Spracherkenners Funktionen der sprecherunabhängigen Namenswahl implementiert. Alle Namen im Adressbuch des Benutzers werden dem Spracherkenner über eine Graphem-zu-Phonem-Technologie bekannt gemacht und können damit direkt per Sprache gewählt werden.

Im Initialzustand des Systems existieren keine Sprachkonserven zu den Adressbucheinträgen. Bei Aktivierung der Funktionalität zur sprecherunabhängigen Namenswahl wird der durch den Benutzer gesprochene Name dem Spracherkenner zugeführt und parallel als Sprachkonserve mitgeschnitten. Der Spracherkenner liefert das Erkennungsergebnis zurück und es wird überprüft, ob zu dem Erkennungsergebnis bereits eine Sprachkonserve vorliegt.

Existiert noch keine Sprachkonserve, wird das Erkennungsergebnis auf dem Display angezeigt und der Benutzer mit einem Voice Prompt wie zum Beispiel "Erkennung bestätigen" oder "Wählen" aufgefordert, das Erkennungsergebnis zu bestätigen. Wird das Ergebnis durch die Taste "Wählen" bestätigt, wird die Sprachkonserve dem Adressbucheintrag zugeordnet und die Nummer wird gewählt. Wird das Ergebnis durch die Taste "Abbrechen" nicht bestätigt, wird die Sprachkonserve gelöscht und kein Wählvorgang durchgeführt.

Ist zu einem erkannten Adressbucheintrag bereits eine Sprachkonserve zugeordnet, wird diese neben der Displayanzeige dem Benutzer vorgespielt. Der Wahlvorgang wird danach automatisch gestartet. Durch die Sprachrückmeldung (Voice Feedback) hat der Benutzer auch im Handsfree-Betrieb die Möglichkeit, einfach zu überprüfen, ob das Erkennungsergebnis korrekt ist. Während des gestarteten Wählvorgangs bleibt dem Benutzer in der Regel genügend Zeit, den Wahlvorgang im Falle einer Fehlerkennung noch abzubrechen.

Zusätzlich zu der oben beschriebenen automatischen Zuordnung von Sprachkonserven kann dem Benutzer die Möglichkeit angeboten werden, explizit selbst Sprachkonserven aufzunehmen und manuell zuzuordnen.

Verwenden mehrere Benutzer ein Gerät, können Benutzerprofile angelegt werden, bei denen für jeden Benutzer individuell seine eigenen Sprachkonserven im jeweiligen Profil hinterlegt werden. Damit lässt sich ein Stimmenmix vermeiden und ein homogenes akustisches Klangbild erreichen.

## Patentansprüche

1. Verfahren zur Sprachrückmeldung bei einer sprecherunabhängigen Spracherkennung, insbesondere auf eingebetteter Hardware und/oder einem mobilen Endgerät,
- bei dem ein erstes Sprachsignal eingegeben wird,
- bei dem das eingegebene erste Sprachsignal aufgenommen wird und erkannt wird, indem es einem Erkennungseintrag zugeordnet wird,
- bei dem die Aufnahme des eingegebenen ersten Sprachsignals als dem Erkennungseintrag zugeordnet gespeichert wird,
- bei dem ein weiteres Sprachsignal eingegeben wird,
- bei dem das weitere eingegebene Sprachsignal erkannt wird, indem es dem Erkennungseintrag zugeordnet wird,
- bei dem die als dem Erkennungseintrag zugeordnet gespeicherte Aufnahme des eingegebenen ersten Sprachsignals ausgegeben wird.

2. Verfahren nach Anspruch 1,
bei dem die Aufnahme des eingegebenen ersten Sprachsignals nur dann als dem Erkennungseintrag zugeordnet gespeichert wird, wenn bestätigt wird, dass das eingegebene erste Sprachsignal richtig erkannt wurde.

3. Verfahren nach einem der vorhergehenden Ansprüche,
bei dem eine optische Repräsentation des Erkennungseintrags ausgegeben wird.

4. Verfahren nach einem der vorhergehenden Ansprüche,
bei dem zu einem weiteren Erkennungseintrag ohne zwischengeschaltete Spracherkennung ein gewünschtes Sprachsignal eingebbar und abspeicherbar ist.

5. Verfahren nach einem der vorhergehenden Ansprüche,
bei dem das Verfahren ein Verfahren zur Namenswahl, insbesondere für eine Kommunikationseinrichtung, ist, insbesondere ein Verfahren zur sprecherunabhängigen Namenswahl.

6. Verfahren nach einem der Ansprüche 1 bis 4,
bei dem das Verfahren ein Verfahren zur Eingabe von Stadt- und/oder Straßennamen ist, insbesondere ein Verfahren zur sprecherunabhängigen Eingabe von Stadt- und/oder Straßennamen.

7. Verfahren nach einem der Ansprüche 1 bis 4,
bei dem das Verfahren ein Verfahren zur sprachgestützten Applikationssteuerung ist.

8. Verfahren nach einem der Ansprüche 1 bis 4,
bei dem das Verfahren ein Verfahren zur sprachgesteuerten Auswahl von Internet Links (Voice Links) ist.

9. Vorrichtung, die eingerichtet ist und Mittel aufweist, so dass ein Verfahren nach einem der Ansprüche 1 bis 6 ausführbar ist.

10. Vorrichtung nach Anspruch 9,
die ein mobiles Endgerät ist, insbesondere eine mobile Kommunikationseinrichtung und/oder mobile Navigationseinrichtung.

11. Programmprodukt, das, wenn es auf eine Datenverarbeitungsanlage geladen und darauf ausgeführt wird, ein Verfahren nach einem der Ansprüche 1 bis 8 oder eine Vorrichtung nach einem der Ansprüche 9 oder 10 in Kraft setzt.

## Claims

1. Method for speaker-independent speech recognition for voice acknowledgement, especially on embedded hardware and/or a mobile terminal,
- in which a first voice signal is input,
- in which the inputted first voice signal is recorded and is recognized by assigning it to a recognition entry,
- in which the recording of the inputted first voice signal is stored in memory as being assigned to the recognition entry,
- in which a further voice signal is input,
- in which the further inputted voice signal is recognized by assigning it to the recognition entry,
- in which the recording of the inputted first voice signal stored in memory as being assigned to the recognition entry is output.

2. Method according to claim 1,
in which the recording of the inputted first voice signal is only stored in memory as being assigned to the recognition entry if it is confirmed that the inputted first voice signal has been recognized correctly.

3. Method according to one of the preceding claims,
in which a visual representation of the recognition entry is output.

4. Method according to one of the preceding claims,
in which a desired voice signal is capable of being input and stored in memory in association with a further recognition entry without intervening speech recognition.

5. Method according to one of the preceding claims,
in which the method constitutes a method for name dialling, especially for a communication facility, and especially a method for speaker-independent name dialling.

6. Method according to one of claims 1 to 4,
in which the method constitutes a method for inputting town and/or street names, and especially a method for speaker-independent input of town and/or street names.

7. Method according to one of claims 1 to 4,
in which the method constitutes a method for voice-aided control of applications.

8. Method according to one of claims 1 to 4,
in which the method constitutes a method for voice-controlled selection of Internet links (Voice Links).

9. Device which is set up and displays resources so that a method according to one of claims 1 to 6 is capable of being executed.

10. Device according to claim 9,
which constitutes a mobile terminal, and especially a mobile communication facility and/or a mobile navigation facility.

11. Program product which, when loaded on a data processing system and executed on said data processing system, puts a method according to one of claims 1 to 8 or a device according to one of claims 9 or 10 into effect.

## Revendications

1. Procédé permettant une réponse vocale lors d'une reconnaissance vocale indépendante du locuteur, notamment sur un matériel intégré et/ou un terminal mobile,
- dans lequel un premier signal vocal est entré,
- dans lequel le premier signal vocal entré est enregistré et reconnu en étant associé à une entrée de reconnaissance,
- dans lequel l'enregistrement du premier signal vocal entré est mémorisé comme étant associé à l'entrée de reconnaissance,
- dans lequel un nouveau signal vocal est entré,
- dans lequel le nouveau signal vocal entrée est reconnu en étant associé à l'entrée de reconnaissance,
- dans lequel l'enregistrement du premier signal vocal entré mémorisé comme étant associé à l'entrée de reconnaissance est sorti.

2. Procédé selon la revendication 1,
dans lequel l'enregistrement du premier signal vocal entré n'est mémorisé comme étant associé à l'entrée de reconnaissance que s'il est confirmé que le premier signal vocal entré a été correctement reconnu.

3. Procédé selon l'une des revendications précédentes,
dans lequel une représentation optique de l'entrée de reconnaissance est sortie.

4. Procédé selon l'une des revendications précédentes,
dans lequel un signal vocal souhaité peut être entré et mémorisé pour une nouvelle entrée de reconnaissance sans reconnaissance vocale intercalée.

5. Procédé selon l'une des revendications précédentes,
dans lequel le procédé est un procédé de composition par nom, notamment pour un dispositif de communication, notamment un procédé de composition par nom indépendante du locuteur.

6. Procédé selon l'une des revendications 1 à 4,
dans lequel le procédé est un procédé pour l'entrée de noms de ville et/ou de rue, notamment un procédé pour l'entrée indépendante du locuteur de noms de ville et/ou de rue.

7. Procédé selon l'une des revendications 1 à 4,
dans lequel le procédé est un procédé pour la commande d'applications par la voix.

8. Procédé selon l'une des revendications 1 à 4,
dans lequel le procédé est un procédé pour la sélection commandée par la voix de liens Internet (*Voice Links*).

9. Dispositif adapté et possédant des moyens pour permettre l'exécution d'un procédé selon l'une des revendications 1 à 6.

10. Dispositif selon la revendication 9,
consistant en un terminal mobile, notamment un dispositif de communication mobile et/ou dispositif de navigation mobile.

11. Produit programme qui, lorsqu'il est chargé et exécuté sur un dispositif de traitement de données, met en oeuvre un procédé selon l'une des revendications 1 à 8 ou fait fonctionner un dispositif selon l'une des revendications 9 ou 10.
